(19) **Europäisches Patentamt / European Patent Office / Office européen des brevets**

(11) **EP 4 660 958 A1**

(12) # EUROPEAN PATENT APPLICATION
published in accordance with Art. 153(4) EPC

(43) Date of publication:
**10.12.2025 Bulletin 2025/50**

(21) Application number: **24773913.9**

(22) Date of filing: **05.03.2024**

(51) International Patent Classification (IPC):
***G06T 17/00*** *(2006.01)*

(52) Cooperative Patent Classification (CPC):
**G06T 7/00; G06T 7/11; G06T 17/00**

(86) International application number:
**PCT/CN2024/080158**

(87) International publication number:
**WO 2024/193345 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.03.2023 CN 202310276937**

(71) Applicant: **Hangzhou Chohotech Co., Ltd.**
**Hangzhou, Zhejiang 310023 (CN)**

(72) Inventors:
• **MA, Chenglong**
  **Hangzhou, Zhejiang 310023 (CN)**
• **ZHAO, Zeyu**
  **Hangzhou, Zhejiang 310023 (CN)**

(74) Representative: **Gille Hrabal**
**Partnerschaftsgesellschaft mbB**
**Patentanwälte**
**Brucknerstraße 20**
**40593 Düsseldorf (DE)**

(54) **SEGMENTATION METHOD FOR DENTAL THREE-DIMENSIONAL DIGITAL MODEL**

(57) One aspect of the present application provides a computer-implemented method for segmenting a 3D digital model of a jaw, the method comprises: obtaining a 3D digital model of a jaw; performing UV unwrapping on the 3D digital model of the jaw, to obtain a 2D UV map of the jaw, where a pixel value of each pixel of the 2D UV map of the jaw comprises a feature of a corresponding point on the 3D digital model of the jaw; segmenting the 2D UV map of the jaw using a trained deep neural network, where the result of the segmentation comprises masks of teeth; and mapping the segmentation result back to the 3D digital model of the jaw.

100

a 3D digital model of a jaw is obtained — 101

the 3D digital model of the jaw is pre-processed — 103

the pre-processed 3D digital model of the jaw is UV unwrapped to obtain a 2D UV map of the jaw — 105

the 2D UV map of the jaw is segmented using a trained deep neural network — 107

a 2D UV map of each tooth is cropped from the 2D UV map of the jaw according to the segmentation result of the first deep neural network, and 2D UV map of each tooth is segmented using a second deep neural network based on the segmentation result of the first deep neural network — 109

the segmentation result is mapped back to the 3D digital model of the jaw — 111

**FIG. 1**

EP 4 660 958 A1

**Description**

**FIELD OF THE APPLICATION**

The present application generally relates to a method for segmenting a 3D digital model of a jaw.

**BACKGROUND**

Nowadays, dental treatment increasingly relies on computer technologies. In many cases, it is necessary to segment a 3D digital model of a jaw obtained by scanning which 3D digital model comprises a dentition and at least part of gingival, to separate crowns of all teeth, so that each crown on the 3D digital model of the jaw can be manipulated separately, for example, translate or rotate.

At present, a 3D digital model of a jaw is usually segmented manually through a computer user interface. However, such segmenting method has the following drawbacks: (1) operators are required to have professional training; (2) segmenting efficiency is low; (3) segmenting result depends on the operator's skills, and consistency is not high.

In view of the above, it is necessary to provide a new method for segmenting a 3D digital model of a jaw.

**SUMMARY**

In one aspect, the present application provides a computer-implemented method for segmenting a 3D digital model of a jaw, the method comprising: obtaining a 3D digital model of a jaw; performing UV unwrapping on the 3D digital model of the jaw, to obtain a 2D UV map of the jaw, where a pixel value of each pixel of the 2D UV map of the jaw includes a feature/features of a corresponding point on the 3D digital model of the jaw; segmenting the 2D UV map of the jaw using a trained deep neural network, where the result of the segmentation includes masks of the teeth; and mapping the segmentation result back to the 3D digital model of the jaw.

In some embodiments, the 3D digital model of the jaw may comprise a plurality of teeth and at least part of gingival.

In some embodiments, the segmentation result may further comprise tooth numbers of the teeth.

In some embodiments, the feature/features may comprise a normal vector.

In some embodiments, the feature/features may further comprise 3D coordinates and/or curvature.

In some embodiments, the deep neural network may comprise an instance segmentation network and a sematic segmentation network, the computer-implemented method for segmenting a 3D digital model of a jaw may further comprise: scaling the 2D UV map of the jaw to a first resolution; segmenting the scaled 2D UV map of the jaw using the trained instance segmentation network, to obtain rough dental masks and tooth numbers of the teeth; according to the segmentation result of the instance segmentation network, cropping each tooth' 2D UV map from the 2D UV map of the jaw, and scaling the 2D UV maps to a second resolution; segmenting the scaled 2D UV maps of the teeth using the trained semantic segmentation network based on the rough dental masks of the teeth, to obtain refined masks of the teeth, where fineness of the scaled 2D UV maps of the teeth is higher than that of the scaled 2D UV map of the jaw, and the segmentation result mapped to the 3D digital model of the jaw is the segmentation result generated by the semantic segmentation network.

In some embodiments, the 2D UV maps of the teeth may be cropped using a rectangular box having a predetermined aspect ratio.

In some embodiments, the rectangular box may be a square box.

In another aspect, the present application provides a computer system for segmenting a 3D digital model of a jaw, which comprises a processor and a storage device, where the storage device stores therein a computer program for segmenting a 3D digital model of a jaw, the computer program, when executed, will cause the processor to implement the method for segmenting a 3D digital model of a jaw.

**BRIEF DESCRIPTION OF THE DRAWINGS**

The above and other features of the present application will be further illustrated below with reference to figures and their detailed description. It should be appreciated that these figures only show several exemplary embodiments according to the present application, so they should not be construed as limiting the scope of the present application. Unless otherwise specified, the figures are not necessarily drawn to scale, and similar reference numbers therein denote similar components.

FIG. 1 schematically illustrates a flow chart of a method for segmenting a 3D digital model of a jaw according to one embodiment of the present application;

FIG. 2 schematically illustrates a 3D digital model of a jaw in one example of the present application;

FIG. 3 schematically illustrates a 2D UV map of the jaw obtained by performing UV unwrapping on the 3D digital model of the jaw shown in FIG. 2;

FIG. 4 schematically illustrates a result obtained by segmenting the 2D UV map of the jaw shown in FIG. 3 by a first deep neural network;

FIG. 5A schematically illustrates a rough mask of a tooth obtained by a first deep neural network in one example; and

FIG. 5B schematically illustrates a refined mask of a corresponding tooth obtained by segmenting a 2D UV map of the tooth by a second deep neural network based on the rough mask shown in FIG. 5A in one example.

## DETAILED DESCRIPTION OF ILLUSTRATED EMBODIMENTS

In the following detailed description, reference is made to the accompanying drawings, which form a part thereof. Exemplary embodiments in the detailed description and figures are only intended for illustration purpose and not meant to be limiting. Inspired by the present application, those skilled in the art can understand that other embodiments may be utilized and other changes may be made, without departing from the spirit or scope of the present application. It will be readily understood that aspects of the present application described and illustrated herein can be arranged, replaced, combined, separated and designed in a wide variety of different configurations, all of which are explicitly contemplated and make part of the present application.

One aspect of the present application provides a computer-implemented method for segmenting a 3D digital model of a jaw. In the method, UV unwrapping is performed on a 3D digital model of a jaw to obtain a 2D UV map, then teeth are segmented using a trained deep neural network based on the 2D UV map to obtain masks and tooth numbers of the teeth in the 2D UV map, and lastly, the segmentation result is mapped back to the 3D digital model of the jaw.

Another aspect of the present application provides a computer system for segmenting a 3D digital model of a jaw, which computer system comprises a processor and a storage device, where the storage device stores therein a computer program for segmenting a 3D digital model of a jaw, the computer program, when executed, will cause the processor to implement the method for segmenting a 3D digital model of a jaw.

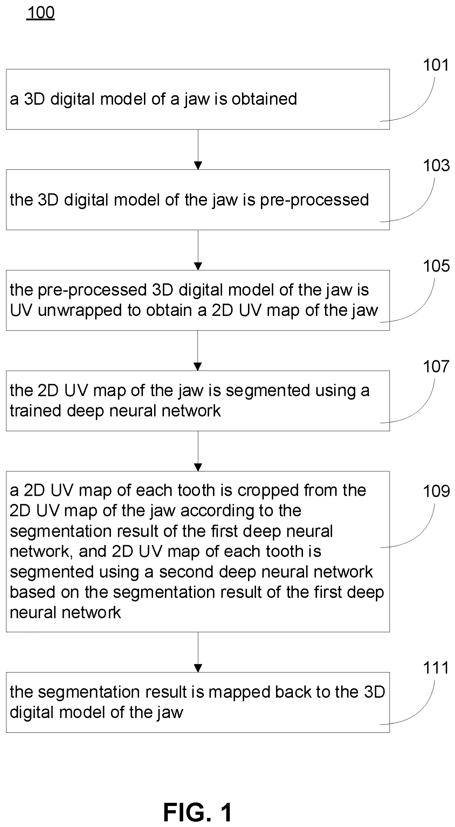

Please refer to FIG. 1, it schematically illustrates a flow chart of a method 100 for segmenting a 3D digital model of a jaw according to one embodiment of the present application.

In 101, a jaw 3D digital model is obtained.

In some embodiments, a 3D digital model of a jaw may be obtained by directly scanning a patient's jaw. In other embodiments, a 3D digital model of a jaw may be obtained by scanning a physical model such as a plaster model of a patient's jaw. In further embodiments, a 3D digital model of a jaw may be obtained by scanning an impression of a patient's jaw.

The jaw 3D digital model may be a 3D digital model of a single-jaw (upper jaw or lower jaw).

In 103, the 3D digital model of the jaw is pre-processed.

In many cases, the jaw 3D digital model obtained by scanning is a closed 3D model, and cannot be UV unwrapped. Bottom removal needs to be performed on such a 3D digital model of a jaw first.

In one embodiment, a predetermined number of points, e.g., 1000 points, may be uniformly sampled on the 3D digital model of the jaw. Then a plane is fit based on these sampled points. The 3D digital model of the jaw is cut into two portions with the plane, and the portion on the side where the teeth are located is kept.

It is understood that in addition to the above method, any other suitable method may be used to determine the plane for bottom removal. For example, after the plane is determined by the above method, a position of the plane along its normal (i.e., a position in a height direction) may be adjusted so that the plane is used as the plane for bottom removal. In another example, a bottom surface of the 3D digital model of the jaw may be raised by a certain distance, and used as the plane for bottom removal.

To enable UV unwrapping, the 3D digital model of the jaw (also referred to as a mesh) after the bottom removal needs to be further processed to make its topology equivalent to that of a disk. The process comprises two operations: (1) removing non-manifold facets and genus from the bottom removed 3D digital model of the jaw; (2) filling all other holes except the largest one. The two operations are repeated until the topology of the obtained 3D digital model of the jaw is equivalent to that of a disk.

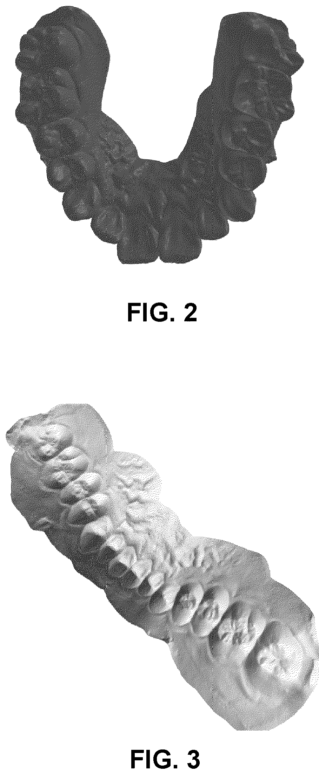

Please referring to FIG. 2, it schematically illustrates a pre-processed 3D digital model of a jaw in one example of the present application.

In 105, UN unwrapping is performed on the pre-processed 3D digital model of the jaw to obtain a 2D UV map of the jaw.

First, UV mapping is performed on the pre-processed jaw 3D digital model. The UV mapping may be written as the following Equation (1):

$$(u_i, v_i) = F(x_i, y_i, z_i) \qquad \text{Equation (1)}$$

where $u_i$ and $v_i$ stand for UV mapping coordinates of the $i^{th}$ point, $(x_i, y_i, z_i)$ stand for coordinates of the $i^{th}$ point in 3D space, and F stands for a UV mapping function.

In one embodiment, a known UV mapping algorithm may be used, for example, an algorithm disclosed in "Multiresolution Analysis of Arbitrary Meshes" by Eck M, DeRose T and Duchamp T et al. published on Proceedings of the 22nd Annual Conference on Computer Graphics and Interactive Techniques, 1995: 173-182, or an algorithm disclosed in "Least Squares Conformal Maps for Automatic Texture Atlas Generation" by Lévy B, Petitjean S and Ray N et al. published on ACM Transactions on Graphics (TOG), 2002, 21(3): 362-371.

After UV mapping is completed, the UV unwrapping may be performed on the 3D digital model of the jaw according to the calculated UV mapping coordinates, to obtain the 2D UV map of the jaw. The 2D UV map of the jaw is hereinafter referred to as an initial 2D UV map of the jaw. In the 2D UV map of the jaw, a pixel value (e.g., texture) of each point is a feature/features of the corresponding point on the 3D digital model of the jaw so that a deep neural network can subsequently segment the 2D UV map of the jaw based on the features.

In one embodiment, the feature/features may comprise a normal vector, for example, a normalized normal vector. In another embodiment, the feature/features may further comprise 3D coordinates and/or curvature in addition to the normal vector.

In one embodiment, the UV mapping may be based on center points of facets of the 3D digital model of the jaw. The solution is used in the embodiment that is being described in detail. In another embodiment, the UV mapping may also be based on nodes of the 3D digital model of the jaw.

Please refer to FIG. 3, it schematically illustrates a 2D UV map of a jaw obtained by performing UV unwrapping on the 3D digital model of the jaw shown in FIG. 2, with normalized normal vector as the feature.

In 107, the 2D UV map of the jaw is segmented using a trained first deep neural network.

In one embodiment, the 2D UV map input to the first deep neural network needs to comply with a predetermined specification, for example, 640*640 pixels. Therefore, before being input to the first deep neural network, the 2D UV map of the jaw may be scaled and re-rendered such that its resolution complies with the predetermined specification. In one embodiment, the predetermined specification may be set to a lower resolution to facilitate network training and simplify calculation.

In one embodiment, the first deep neural network is an instance segmentation network which may be any suitable network such as Mask RCNN, Hybrid Task Cascade (HTC) and SOLOv2.

The first deep neural network segments the input scaled 2D UV map of the jaw, to obtain masks and tooth numbers of the teeth.

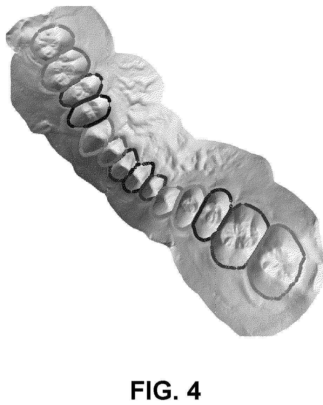

Please refer to FIG. 4, it schematically illustrates boundaries of the teeth obtained by segmenting the UV map shown in FIG. 3 by the first deep neural network.

In 109, the UV map of each tooth is cropped from the UV map according to the segmentation result of the first deep neural network, and the UV map of each tooth is segmented using a trained second deep neural network based on the segmentation result of the first deep neural network.

Since the resolution of the scaled 2D UV map of the jaw input to the first deep neural network is low, the obtained segmentation result is coarse.

In one embodiment, in order to obtain finer and smoother segmentation boundaries, the 2D UV map of each tooth may be cropped from the initial 2D UV map of the jaw (i.e., the unscaled jaw 2D UV map) according to the segmentation result of the first deep neural network, and is scaled to a predetermined specification, and the boundaries (or masks) segmented by the first deep neural network may be optimized based on the scaled 2D UV map of each tooth. Since the fineness of the scaled 2D UV map of each tooth is significantly higher than that of the scaled 2D UV map of the jaw, the result of the second segmentation is finer than that of the first segmentation, and the boundaries are smoother.

In one embodiment, for each tooth, the 2D UV map of the tooth may be cropped from the initial 2D UV map of the jaw using a rectangular box (e.g., a square box) enclosing the tooth and having a predetermined aspect ratio. In one embodiment, a margin may be kept when the 2D UV map of each tooth is cropped, for example, the width and height of the result of the first-time segmentation only occupy 80% of the width and height of the rectangular box.

Then, the 2D DV map of each tooth is scaled and re-rendered such that it meets requirements of the second deep neural network for an input image, for example, scaled to 640*640. As for the fineness of the image, the fineness of the 2D UV map of each tooth input to the second deep neural network is higher than that of the 2D UV map of the jaw input to the first deep neural network.

Then, the 2D UV maps of the teeth are segmented using the second deep neural network based on the rough masks of the teeth (i.e., the masks obtained by segmenting using the first deep neural network) to obtain fine masks of the teeth. As compared with the rough masks, these fine masks have finer and smoother tooth boundaries.

The 2D UV map of each tooth not only comprises the current tooth, but also probably comprises portions of neighboring teeth of the current tooth. Semantically, the portions of the neighboring teeth also belong to the teeth. If there are no rough masks, the second deep neural network probably segments the portions of the neighboring teeth as portions of the current tooth. The rough masks provide instance information for the second deep neural network, i.e., instruct the second deep neural network that only the current tooth shall be segmented.

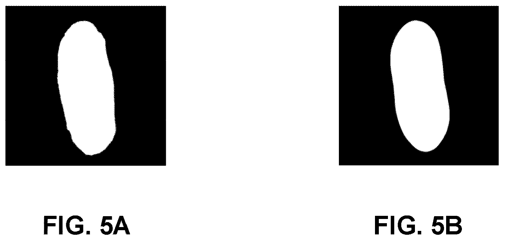

Please refer to FIG. 5A, it schematically illustrates a rough mask of a tooth obtained by segmenting using the first deep neural network in one example.

Please refer to FIG. 5B, it schematically illustrates a refined mask of the corresponding tooth obtained by segmenting a 2D UV map of the tooth using the second deep neural network based on the rough mask shown in FIG. 5A in one example.

In one embodiment, the second deep neural network is a sematic segmentation network, which may be any suitable neural network such as U-Net, DeepLab and UPerNet.

In 111, the segmentation result is mapped back to the 3D digital model of the jaw.

A final segmentation result comprises tooth numbers and the masks of the teeth obtained by segmenting using the second deep neural network.

The final segmentation result may be mapped back to the 3D digital model of the jaw by an inverse operation of the UV mapping function, and may be written as the following Equation (2):

$$(x_i, y_i, z_i) = F^{-1}(u_i, v_i) \hspace{3cm} \text{Equation (2)}$$

where $F^{-1}$ stands for the inverse operation of the UV mapping function.

Inspired by the present application, it is understood that if conditions allow, a high-resolution 2D UV map of the jaw may be input to the first deep neural network, and the segmentation result of the first deep neural network may be taken as the final segmentation result.

While various aspects and embodiments have been disclosed herein, other aspects and embodiments will be apparent to those skilled in the art, inspired by the present application. The various aspects and embodiments disclosed herein are for illustration only and are not intended to be limiting, and the scope and spirit of the present application shall be defined by the following claims.

Likewise, the various diagrams may depict exemplary architectures or other configurations of the disclosed methods and systems, which are helpful for understanding the features and functions that can be included in the disclosed methods and systems. The claimed invention is not restricted to the illustrated exemplary architectures or configurations, and desired features can be achieved using a variety of alternative architectures and configurations. Additionally, with regard to flow diagrams, functional descriptions and method claims, the order in which the blocks are presented herein shall not mandate that various embodiments of the functions shall be implemented in the same order unless otherwise the context specifies.

Unless otherwise specifically specified, terms and phrases and their variants used herein are generally intended as "open" terms instead of limiting. In some embodiments, use of phrases such as "one or more", "at least" and "but not limited to" should not be construed to imply that the parts of the present application that do not use similar phrases intend to be limiting.

**Claims**

1. A computer-implemented method for segmenting a 3D digital model of a jaw, comprising:

   obtaining a 3D digital model of a jaw;
   performing UV unwrapping on the 3D digital model of the jaw, to obtain a 2D UV map of the jaw, where a pixel value of each pixel of the 2D UV map of the jaw comprises a feature/features of a corresponding point on the 3D digital model of the jaw;
   segmenting the 2D UV map of the jaw using a trained deep neural network, where the result of the segmentation comprises masks of teeth; and
   mapping the segmentation result back to the 3D digital model of the jaw.

2. The computer-implemented method of claim 1, wherein the 3D digital model of the jaw comprises a plurality of teeth and at least part of gingival.

3. The computer-implemented method of claim 1, wherein the segmentation result further comprises tooth numbers of the teeth.

4. The computer-implemented method of claim 1, wherein the feature/features comprises a normal vector.

5. The computer-implemented method of claim 4, wherein the features further comprise 3D coordinates and/or curvature.

6. The computer-implemented method of claim 1, wherein the deep neural network comprises an instance segmentation network and a sematic segmentation network, the method further comprising:

   scaling the 2D UV map of the jaw to a first resolution;
   segmenting the scaled 2D UV map of the jaw using the trained instance segmentation network, to obtain rough masks and tooth numbers of the teeth;
   based on the segmentation result of the instance segmentation network, cropping a 2D UV map of each tooth from the 2D UV map of the jaw, and scaling the 2D UV map of the tooth to a second resolution;
   segmenting the scaled 2D UV maps of the teeth using the trained semantic segmentation network based on the rough masks of the teeth, to obtain refined masks of the teeth,
   where fineness of the scaled 2D UV map of each tooth is higher than that of the scaled 2D UV map of the jaw, and the segmentation result mapped back to the 3D digital model of the jaw is the segmentation result generated by the semantic segmentation network.

7. The computer-implemented method of claim 1, wherein the 2D UV map of each tooth is cropped using a rectangular box having a predetermined aspect ratio.

8. The computer-implemented method of claim 7, wherein the rectangular box is a square box.

9. A computer system for segmenting a jaw 3D digital model, comprising a processor and a storage device, where the storage device stores therein a computer program for segmenting a 3D digital model of a jaw, the computer program, when executed, will cause the processor to implement the method for segmenting a 3D digital model of a jaw of claim 1.

100

a 3D digital model of a jaw is obtained — 101

↓

the 3D digital model of the jaw is pre-processed — 103

↓

the pre-processed 3D digital model of the jaw is UV unwrapped to obtain a 2D UV map of the jaw — 105

↓

the 2D UV map of the jaw is segmented using a trained deep neural network — 107

↓

a 2D UV map of each tooth is cropped from the 2D UV map of the jaw according to the segmentation result of the first deep neural network, and 2D UV map of each tooth is segmented using a second deep neural network based on the segmentation result of the first deep neural network — 109

↓

the segmentation result is mapped back to the 3D digital model of the jaw — 111

# FIG. 1

FIG. 2

FIG. 3

FIG. 4

FIG. 5B

FIG. 5A

## INTERNATIONAL SEARCH REPORT

| International application No. |
| --- |
| **PCT/CN2024/080158** |

**A. CLASSIFICATION OF SUBJECT MATTER**

G06T17/00(2006.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNTXT, USTXT, DWPI, CNKI, IEEE: 牙, 二维, 三维, 分割, 映射, 展开, 贴图, 遮罩, 掩膜, 分辨率, 粗, 细, 精, UV, tooth, 2D, 3D, segmentation, mapping, unfold, mask, resolution, coarse, fine

**C. DOCUMENTS CONSIDERED TO BE RELEVANT**

| Category* | Citation of document, with indication, where appropriate, of the relevant passages | Relevant to claim No. |
| --- | --- | --- |
| Y | CN 109903396 A (LUOYANG INSTITUTE OF INFORMATION TECHNOLOGY INDUSTRIES (LUOYANG BRANCH INSTITUTE OF ICT)) 18 June 2019 (2019-06-18) description, paragraphs 2-25 and 35-65 | 1-9 |
| Y | CN 115731163 A (NINTH PEOPLE'S HOSPITAL AFFILIATED TO SHANGHAI JIAO TONG UNIVERSITY SCHOOL OF MEDICINE) 03 March 2023 (2023-03-03) description, paragraph 8 | 1-9 |
| Y | CN 114782460 A (ALIBABA DAMOYUAN (HANGZHOU) TECHNOLOGY CO., LTD.) 22 July 2022 (2022-07-22) description, paragraph 40 | 6 |
| A | CN 114714626 A (PEKING UNIVERSITY SCHOOL OF STOMATOLOGY) 08 July 2022 (2022-07-08) entire document | 1-9 |
| A | WO 2021250091 A1 (PEARL 3D et al.) 16 December 2021 (2021-12-16) entire document | 1-9 |

☐ Further documents are listed in the continuation of Box C. ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 April 2024** | **28 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/080158**

| Patent document cited in search report | | | Publication date (day/month/year) | Patent family member(s) | | | Publication date (day/month/year) |
|---|---|---|---|---|---|---|---|
| CN | 109903396 | A | 18 June 2019 | None | | | |
| CN | 115731163 | A | 03 March 2023 | None | | | |
| CN | 114782460 | A | 22 July 2022 | None | | | |
| CN | 114714626 | A | 08 July 2022 | WO | 2023185405 | A1 | 05 October 2023 |
| WO | 2021250091 | A1 | 16 December 2021 | US | 2023206451 | A1 | 29 June 2023 |
| | | | | FR | 3111268 | A1 | 17 December 2021 |
| | | | | EP | 4165595 | A1 | 19 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ECK M** ; **DEROSE T** ; **DUCHAMP T et al.** Multi-resolution Analysis of Arbitrary Meshes. *Proceedings of the 22nd Annual Conference on Computer Graphics and Interactive Techniques*, 1995, 173-182

- **LÉVY B** ; **PETITJEAN S** ; **RAY N et al.** Least Squares Conformal Maps for Automatic Texture Atlas Generation. *ACM Transactions on Graphics (TOG)*, 2002, vol. 21 (3), 362-371